# EUROPEAN PATENT APPLICATION

(11) **EP 2 050 650 A1**
(43) Date of publication of application: **22.04.2009**
(21) Application number: 08021904.1
(22) Date of filing: 14.04.2006
(51) Int. Cl.: B62B 3/06

(54) **Stability system for an industrial vehicle**

(30) Priority: 14.04.2005 US 672148 P; 14.04.2005 US 671548 P; 13.04.2006 US 404171; 13.04.2006 US 404607
(62) Divisional of application: 06750287.2
(71) Applicant: NACCO Materials Handling Group, Inc., Portland, Oregon 97232 (US)
(72) Inventor: Passeri, Gianni, 46030 Virgilio (IT)
(74) Representative: Hess, Peter K. G.

(57) **Abstract**

A load roller assembly for mounting in a fork end 512 of a pallet truck 5, wherein the load roller assembly 590 comprises a middle load wheel 550B that rotates about a central axis 580, a front load wheel 550A that rotates about a second axis 570, a rear load wheel 550C that rotates about a third axis 575, wherein the front load wheel 550A and the rear load wheel 550B are aligned in an in-line arrangement that overlaps and is adjacent with the middle load wheel 550B.

## Description

### BACKGROUND OF THE INVENTION

The invention relates to a transportation device used primarily in a materials handling vehicle such as an industrial pallet truck.

Industrial pallet trucks typically include a drive or steer wheel located proximately under a vehicle frame of the pallet truck. The drive wheel may include a single tire or dual-tire construct. Two casters/wheels are typically employed which are located adjacent and on opposite sides of the drive wheel. The casters provide additional support of the vehicle frame weight as well as provide additional stability as the pallet truck is being turned or operated on an incline. Load wheels or load rollers are typically located near an end of the pallet truck opposite the vehicle frame, and underneath two forks.

The pallet trucks may be powered by an electric motor or may be manually pulled or pushed by an operator. Electrically powered pallet trucks may further include a platform upon which an operator may ride during transport of a load. For an electrically powered pallet truck, the steer wheel may additionally be used as the drive wheel, such that the steer wheel also provides a traction force that drives the pallet truck.

Pallet trucks may operate in a variety of operating conditions and locations including, for example, a warehouse, a truck yard, a grocery store, a sidewalk or even an automobile road. Operating surfaces associated with these different locations also vary significantly, sometimes as a result of geography. For example, pallet trucks that operate in more rural areas may be required to traverse over unimproved or uneven surfaces such as dirt or gravel. Similarly, operating surfaces in other locations may include cobbled roads, or grooved or siped pavement.

As the pallet truck is driven by either an electric motor or by manual effort of an operator, the steer wheel and load rollers are made to rotate in the direction of vehicle travel. As the pallet truck is operated over uneven or unimproved surfaces, the steer wheel, casters and load rollers tend to move up and down in irregular patterns causing significant vibration in the forks and vehicle frame. This vibration is transmitted through a steering handle to the operator and may result in discomfort during operation of the pallet truck. The vibrations also shake loads on the forks potentially causing the loads to become unstable or dislodged. The vibrations also create a significant amount of noise that can create a dangerous work environment or at the least be a nuisance to the operator and any bystanders.

The vertical movements may cause the steer wheel, casters or load rollers to temporarily lose contact and traction with the ground making it more difficult to operate the lift truck. For example, if the casters lose contact with the operating surface when steering or turning around a corner, a load may move or the pallet truck may tip.

Casters that are rigidly attached to the pallet truck create an additional problem. The drive wheel may partially lose contact with the operating surface, or slip, when either of the casters travels over uneven terrain and moves vertically up and down. If the lose of pressure with the operating surface is significant enough, a loss of traction or braking ability may be experienced.

The present invention addresses these and other problems associated with the prior art.

### SUMMARY OF THE INVENTION

A materials handling vehicle may include a vehicle frame, a drive wheel, a first caster assembly located on the right side of the drive wheel, and a second caster assembly located on the left side of the drive wheel. A weight distribution assembly connects the first or second caster assembly to the vehicle frame and may include an adjustable preload mechanism to provide a preload force to the first or second caster assembly.

The foregoing and other objects, features and advantages of the invention will become more readily apparent from the following detailed description of a preferred embodiment of the invention which proceeds with reference to the accompanying drawings.

### BRIEF DESCRIPTION OF THE DRAWINGS

FIG. 1 is a perspective view of a pallet type forklift truck that may include a novel weight distribution assembly;
FIG. 2 is a perspective view of the weight distribution assembly that may be used with the forklift truck of FIG. 1;
FIG. 3 is a perspective rear view of the forklift truck including the weight distribution assembly of FIG. 2 attached to a vehicle frame;
FIG. 4 is a rotated bottom view of the weight distribution assembly shown in FIG. 2;
FIG. 5 is an exploded view of the weight distribution assembly;
FIG. 6 illustrates an operation of a three wheel system as is known in the art when traveling over a level surface;
FIG. 7 illustrates an operation of the three wheel system shown in FIG. 6 as is known in the art when traveling over an uneven surface;
FIG. 8 illustrates an embodiment of the novel weight distribution assembly when traveling over a level surface;
FIG. 9 illustrates an operation of the novel weight distribution system shown in FIG. 8 when traveling over an uneven surface;
FIG. 10 illustrates a further embodiment of the novel weight distribution assembly when traveling over a level surface;
FIG. 11 illustrates an operation of the novel weight distribution system shown in FIG. 10 when traveling over an uneven surface;
FIG. 12 is an elevated perspective view of the pallet truck having a novel load wheel assembly;
FIG. 13 is a rotated view of the pallet truck of FIG. 12 showing a bottom view of the fork with the load wheel assembly pivoted away from the fork;
FIG. 14 is an exploded and enlarged partial view of the fork and load wheel assembly shown in FIG. 12;
FIG. 15 is an enlarged view of the load wheel assembly shown in FIG. 12 mounted in a fork end; and
FIG. 16 is an elevated right side view of the load wheel assembly shown in FIG. 15.

### DETAILED DESCRIPTION

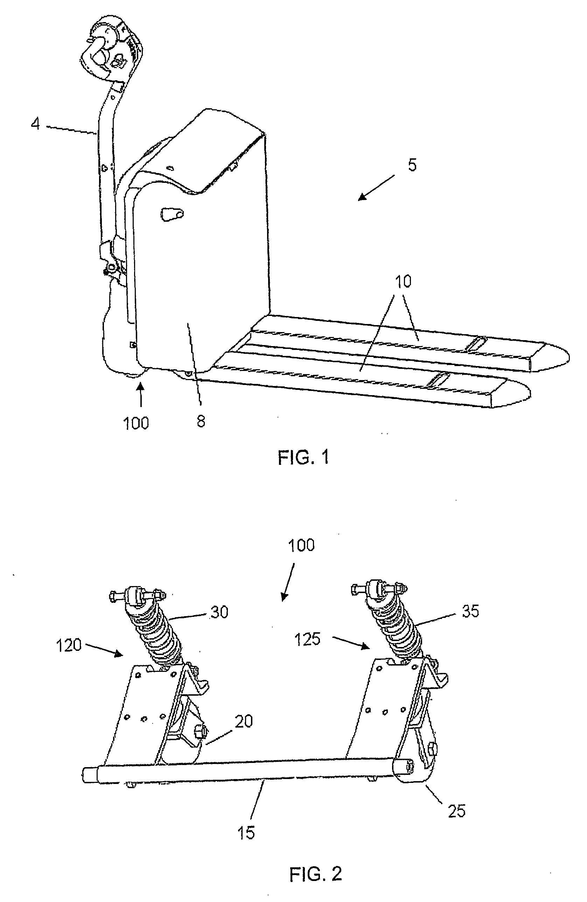

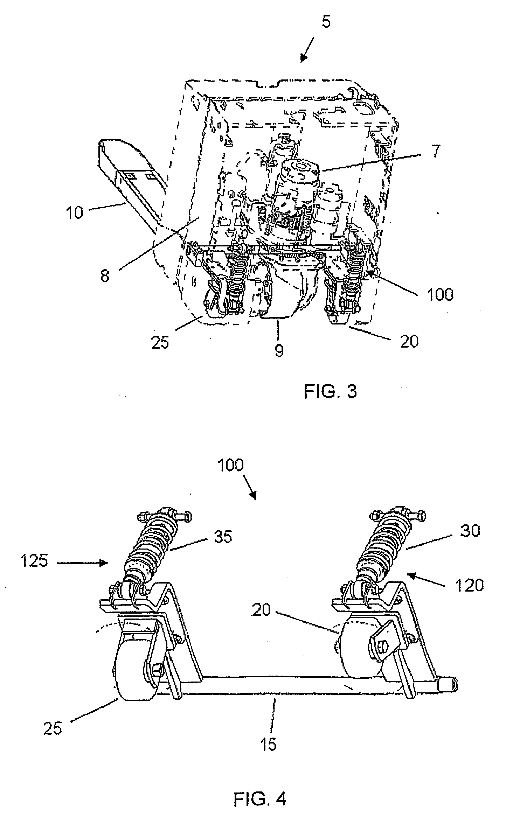

FIG. 1 shows a pallet type forklift truck 5 that includes forks 10, a vehicle frame 8 and a steer arm 4 by which the forklift truck is guided. The steer arm 4 may include electronic or mechanical controls that raise and lower the forks 10, for example, or that activate a traction motor 7 (FIG. 3) residing in the vehicle frame 8. A weight distribution assembly 100 is located in the back of the forklift truck 5 to improve support and stabilization of the forklift truck 5 during operation.

It should be understood that the forklift truck 5 shown is merely one example of a type of forklift truck that could be used with the weight distribution assembly 100. For example, a motorized rider pallet truck may include an extended frame upon which an operator may stand while the motorized rider pallet truck is being operated. Other industrial lift trucks can similarly use the weight distribution assembly 100, and their applications and embodiments used with the stability system are herein claimed.

Forklift trucks, such as forklift truck 5, may be pulled and guided by an operator by means of the steer arm 4, or they may be powered by the traction motor 7 (FIG. 3) and guided by the steer arm 4. In either case, the forklift truck 5 efficiently transports or moves a load which may be placed on one or more forks such as forks 10.

Pallet trucks may frequently be required to operate over rough pavement or other traveling surfaces. For example, it is common to have traveling surfaces that include stones or are cobbled. The load wheels on previous pallet trucks would tend to bounce up and down while traversing over uneven terrain. This subjected the pallet truck, as well as any load on the forks, to increased vibration and irregular shifts in direction. The weight distribution assembly 100 reduces these previous problems.

Referring to FIG. 2, the weight distribution assembly 100 includes a first caster assembly 120 and a second caster assembly 125. The caster assembly 120 and 125 include casters 20 and 25, respectively, as well as dampening devices 30 and 35. The first and second caster assembly 120 and 125, respectively are coupled together with a coupling bar 15.

FIG. 3 shows a rear view of the forklift truck 5 with the steer arm 4 and a back cover removed to show internal components such as the electric motor 7. A drive wheel 9 is located directly below the electric motor 7, along an approximate centerline of the truck in a fore and aft direction. The weight distribution assembly 100 is shown mounted to the vehicle frame 8 such that caster assembly 120 and caster assembly 125 are located on opposite sides of the drive wheel 9.

In a preferred operation of the forklift truck 5, the drive wheel 9 and the casters 20 and 25 all maintain contact with the ground as much as possible. This three point contact helps distribute the supported weight of the forklift truck 5 and load that may be carried on forks 10. Additionally, the casters 20 and 25 provide additional lateral stability when the forklift truck 5 is being turned or when a change in a vehicle center of gravity may otherwise cause the forklift truck 5 to lean or fall over if the casters 20 and 25 were not present.

FIG. 4 shows a rotated bottom isolated view of the weight distribution assembly 100. The weight distribution assembly 100 allows the drive wheel 9 (FIG. 3) to pivot at a constant, fixed height, while the casters 20 and 25 are supported by the dampening devices 30 and 35 and the coupling bar 15.

The casters 20 and 25 are preferably allowed to swivel about an axis perpendicular to the traveling surface. This allows the casters 20 and 25 to follow the direction of the drive wheel 9 as the drive wheel 9 is turned during operation of the forklift truck 5. Swiveling casters are well known in the art and is therefore not described in any further detail. The coupling bar 15 further supports the synchronization of the caster orientation with that of the drive wheel 9.

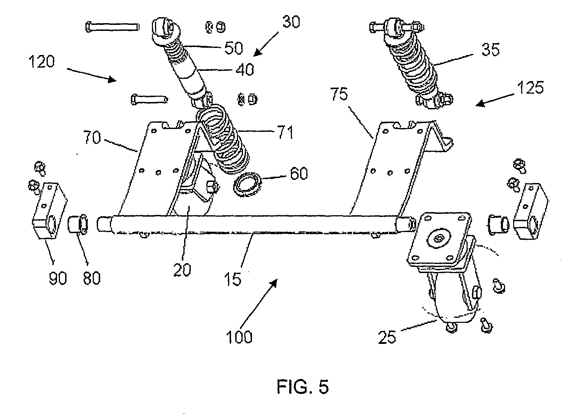

FIG. 5 shows an exploded view of the weight distribution assembly 100. The caster assembly 125 has three subcomponents that include the dampening device 35, the caster 25 and a mounting plate 75. The mounting plate 75 attach the dampening device 35 and the caster 25 with coupling bar 15. Similarly, the caster assembly 120 has three subcomponents that include the dampening device 30, the caster 20 and a mounting plate. The mounting plate 70 attaches the dampening device 30 and the caster 20 with coupling bar 15.

The dampening device 30 includes a hydraulic shock absorber 40 that works in compression and an internal helical spring 50. The dampening device 30 may further include an external helical spring 71 that slides over the shock absorber 40. The external spring 71 works in compression and may be retained in position with a threaded nut 60, such as a gland nut. The dampening device 35 includes similar components and operates in a similar manner.

Advantageously, the threaded nut 60 may be screwed upward to tighten the compression of spring 71 or screwed downward to loosen the compression of spring 71. Increasing the compression of compression spring 71 by screwing nut 60 upwards increases the amount of preload downward force applied to the caster 20. Decreasing the compression of compression spring 71 by screwing nut 60 downwards decreases the amount of downward preload force applied to the caster 20. Thus, the threaded nut 60 can be selectively adjusted prior to operation to vary the preload force according to individual forklift truck capacity and application requirements.

### Other Features

In one embodiment, the weight distribution assembly 100 is assembled as a complete modular unit that may be attached to the vehicle frame 8 as a pre-assembled unit. For example, the weight distribution assembly 100 may be attached to the vehicle frame 8 by means of attaching blocks 90 and flanged bushings 80 shown in FIG. 5. The dampening devices 30 and 35 further attach the mounting plates 70 and 75, respectively, to the vehicle frame 8.

The flanged bushings 80 allow the ends of the coupling bar 15 to be inserted into the attaching blocks 90, such that the coupling bar 15 is free to rotate about its longitudinal axis when either of the dampening devices 30 and 35 compresses and decompresses.

In another embodiment, the coupling bar 15 is made from a unitary non-hollow piece of solid metal. The weight distribution system 100 allows a relatively simple coupling bar 15 to be used for connecting the two caster assemblies 125 and 175 together.

### Operation of the weight distribution assembly

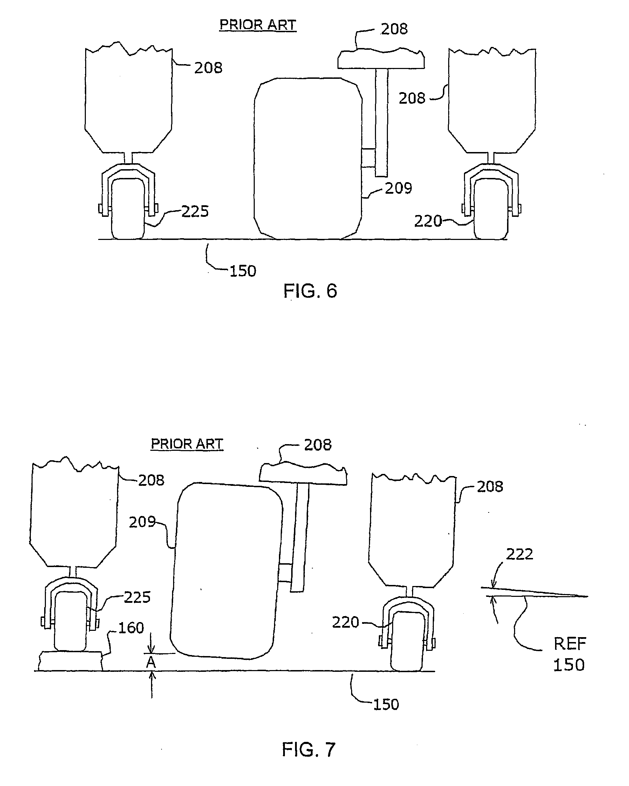

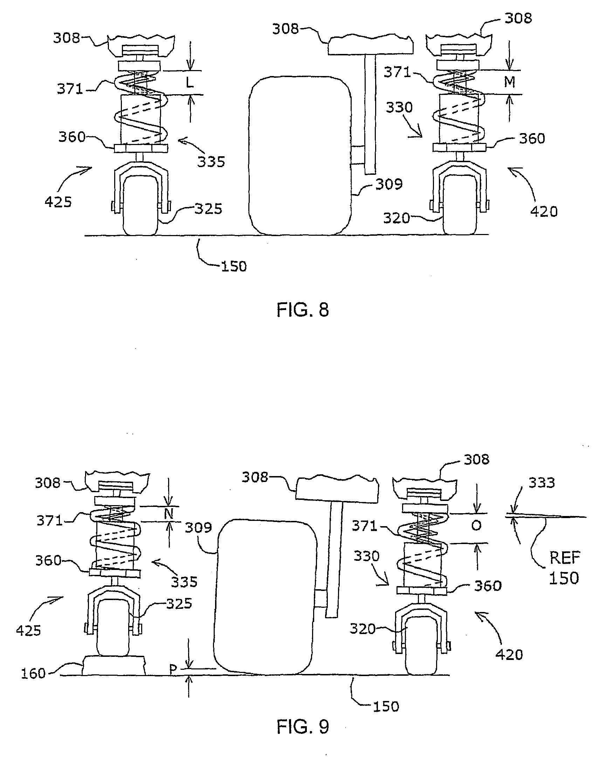

An operation of the novel weight distribution assembly is described after first explaining an operation of a three wheel system known in the art, and as illustrated in FIGs. 6 and 7, in order to further clarify some of the improvements. Alternative embodiments of the novel weight distribution assembly are then described and illustrated making reference to FIGs. 8-11.

FIG. 6 illustrates an operation of the three wheel system as is known in the art when traveling over a level surface 150. Casters 220 and 225 are shown attached to a vehicle frame 208 and provide support of a vehicle weight of a pallet truck. Similarly, a drive wheel 209 also attached to the vehicle frame 208, supports the remainder of the vehicle weight of the pallet truck, not supported by casters 220 and 225. The casters 220 and 225 as well as the drive wheel 209 are all shown to be in contact with the level surface 150. Significantly, the casters 220 and 225 as well as the drive wheel 209 may be considered as rigidly attached to the vehicle frame 208, other than an allowed rotation.

FIG. 7 illustrates an operation of the three wheel system shown in FIG. 6 as is known in the art when traveling over an obstacle 160 located on the level surface 150. In this figure, caster 225 is shown at an elevated position above the obstacle 160, while the caster 220 remains on the level surface 150. Significantly, because the casters 220 and 225 and the drive wheel 209 are considered as rigidly attached to a vehicle frame 208 having a tilt angle 222, the drive wheel 209 is caused to lift off the ground by a distance A, thereby losing an ability to provide traction and braking. In addition to creating an inability to accelerate or brake the pallet truck, an instability of the pallet truck also occurs.

FIG. 8 illustrates an embodiment of the novel weight distribution assembly when traveling over the level surface150. In this embodiment, casters 320 and 325 are mounted to dampening devices 330 and 335, respectively, of caster assemblies 420 and 425. Dampening devices 330 and 335 are shown as including external springs 371 and nuts 360, in order to provide a variable preload force. The caster assemblies 420 and 425 are mounted on the vehicle frame 308 and provide support of a vehicle weight of a pallet truck. Similarly, a drive wheel 309 supports the remainder of the vehicle weight of the pallet truck, not supported by casters 320 and 325. The casters 320 and 325 as well as the drive wheel 309 are all shown to be in contact with the level surface 150.

The dampening devices 330 and 335 of FIG. 8 are shown to be in a compressed state, with dampening device 330 compressed to a distance M and dampening device 335 compressed to a distance L. In a static condition, the distance M and distance L are the same, provided the dampening devices 330 and 335 have been adjusted similarly.

FIG. 9 illustrates an operation of the novel weight distribution assembly shown in FIG. 8 when traveling over an obstacle 160 located on the level surface 150. In this figure, caster 325 is shown at an elevated position above the obstacle 160, while the caster 320 remains on the level surface 150. Dampening device 330 is shown compressed to a distance O and dampening device 335 is shown compressed to a distance N. Because of an increased reaction force of the caster 325 and the obstacle 160, the dampening device 335 is compressed more than when the caster 325 is on the level surface 150, as shown in FIG. 8. As a result, distance N in FIG. 9 is substantially less than distance L of FIG. 8. The dampening device 330, on the other hand, may undergo a moderate decrease in reaction force, such that the distance O in FIG. 9 is approximately the same, or slightly greater than distance M of FIG. 8.

Distances N and O may vary with time according to dynamic reaction forces being applied to casters 320 and 325 when traversing over uneven terrain. For example, the distance O may be observed when caster 325 initially comes into contact with obstacle 160. The distance O may thereafter decrease after the reaction forces become static and redistribute the weight of the vehicle frame 308 between casters 320 and 325, in part due to the tilt angle 333.

As a result of the compression of the dampening device 335, the tilt angle 333 of the vehicle frame 308 in FIG. 9 is less than the tilt angle 222 of the vehicle frame 208 in FIG. 7, and the drive wheel 309 is able to maintain contact with the level surface 150. The drive wheel 309 may be partially lifted from the level surface 150, depending on the amount of compression of the dampening devices 330 and 335. The tilt angle 333 may be adjusted by varying the compression of the dampening devices 330 and 335.

One or both of the nuts 360 may be tightened in order to further compress the springs 371 and make more rigid dampening devices 330 and 335. Similarly, one or both of the nuts 360 may be loosened in order to allow the springs 371 to decompress and make less rigid dampening devices 330 and 335. Adjusting the amount of preload of springs 371 may therefore affect a resultant force acting through the casters 320 and 325, varying the degree of the tilt angle 333, and ultimately varying a resultant force acting through the drive wheel 309. An increased resultant force acting through the drive wheel 309 may provide for an increase in vehicle traction and braking ability.

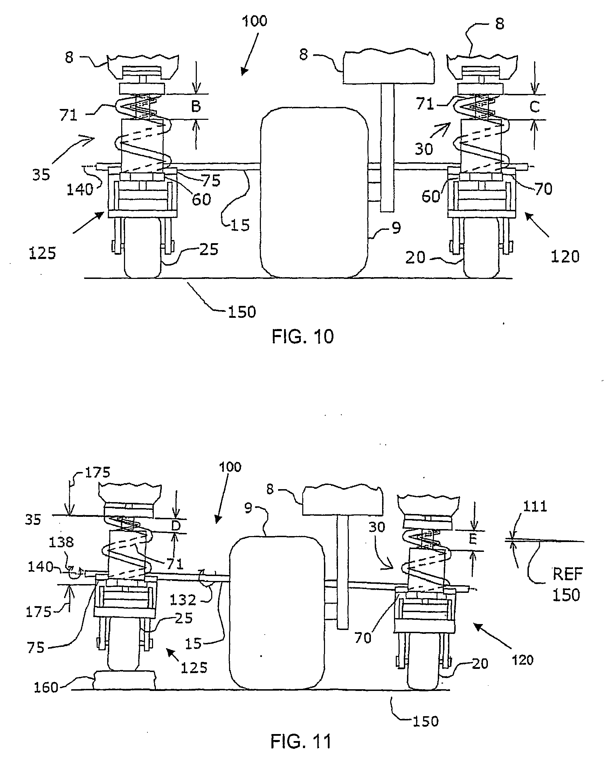

FIG. 10 illustrates a further embodiment of the novel weight distribution assembly 100 when traveling over a level surface 150. Casters 20 and 25 are shown mounted to mounting plates 70 and 75, which are in turn attached to dampening devices 30 and 35, respectively of caster assemblies 120 and 125. Dampening devices 30 and 35 are shown as including the external springs 71 and the nuts 60, in order to provide variable preload forces. The caster assemblies 120 and 125, are mounted on the vehicle frame 8 and provide support of a vehicle weight of the forklift truck 5. Similarly, a drive wheel 9 supports the remainder of the vehicle weight of the forklift truck 5, not supported by casters 20 and 25. The casters 20 and 25 as well as the drive wheel 9 are all shown to be in contact with the level surface 150.

The dampening devices 30 and 35 of FIG. 10 are shown to be in a compressed state, with dampening device 30 compressed to a distance B and dampening device 35 compressed to a distance C. In a static condition, the distance B and distance C are the same, provided the dampening devices 30 and 35 have been adjusted similarly. In addition caster assemblies 120 and 125 are connected together by the coupling bar 15, having a longitudinal axis 140 about which it may rotate.

FIG. 11 illustrates an operation of the novel weight distribution system 100 shown in FIG. 10 when traveling over an obstacle 160. Caster 25 is shown at an elevated position above the obstacle 160, while the caster 20 remains on the level surface 150.

FIG. 11 shows in more detail how the preloading by the dampening devices 30 and 35 can be selectively varied to control a torsional force or torsional moment about the coupling bar 15. As the forklift truck 5 moves, one or both of the dampening device 30 or 35 may compress. In this example, dampening device 35 experiences compression force 175, for example, when the forklift truck 5 is being turned or maneuvered or when traveling over an obstacle 160. Compression force 175 results in a torsional force 132 being transferred through the coupling bar 15 to the caster assembly 120.

The coupling bar 15 couples the mounting plate 75 to the mounting plate 70. A bending moment of the torsion bar between the first and second caster assembly may be varied according to an amount of compression of the dampening devices 30 and 35. At the same time the coupling bar 15 may rotate 138 about a longitudinal axis 140 of coupling bar 15 according to the amount of compression of the dampening devices 30 and 35.

To adjust a torsional relationship between the two caster assemblies 120 and 125, the preload forces against the two caster wheels 20 and 25 may be adjusted by screwing the nuts 60 up or down. When caster assembly 125 is then further compressed during vehicle travel, the given amount of compression 175 will vary the torsional force 132 transferred through coupling bar 15 to the caster assembly 120.

Dampening device 30 is shown compressed to a distance E and dampening device 35 is shown compressed to a distance D. Because of an increased reaction force of the caster 25 and the obstacle 160, the dampening device 35 is compressed by a greater distance than when the caster 25 is on the level surface 150, as shown in FIG. 10. As a result, distance D in FIG. 11 is substantially less than distance B of FIG. 10.

The torsional force 132 transferred through the coupling bar 15 acts against the mounting plate 70 and results in a further compression of the dampening device 30. As a result of the increased torsional force 132 acting through the coupling bar 15 to the dampening device 132, the compression distance E may be less than distance C of FIG. 10. The distance E in FIG. 10 of dampening device 30 shown in FIG. 11 may be less than the distance O of the dampening device 330 shown in FIG. 9.

Distances D and E may vary with time according to dynamic reaction forces being applied to casters 20 and 25 when traversing over uneven terrain. For example, the distance E may be observed when caster 25 initially comes into contact with obstacle 160. The distance E may thereafter decrease after the reaction forces become static and redistribute the weight of the vehicle frame 8 between casters 20 and 25, in part due to the tilt angle 111.

As a result of the compression of the dampening device 30, the tilt angle 111 of the vehicle frame 8 in FIG. 11 may be equal to or less than the tilt angle 333 of the vehicle frame 308 in FIG. 9, and the drive wheel 9 is able to maintain contact with the level surface 150. The drive wheel 9 may be partially lifted from the level surface 150, depending on the amount of compression of the dampening devices 30 and 35. The tilt angle 111 may also be adjusted by varying the compression of the dampening devices 30 and 35.

The contact between the drive wheel 9 and the level surface 150 may be controlled by varying the amount of preload force in springs 71. Significantly, because of the additional compression of the dampening device 30 as a result of the transferred torsional force through the coupling bar 15, and overall decrease in height of the vehicle frame 8 may be achieved when traversing over the obstacle 160 as compared to vehicle frames 208 and 308 of FIGs. 7 and 9. As a result, a contact pressure between the drive wheel 9 of FIG. 11 and the level surface 150 may be greater than that of drive wheels 209 and 309 of FIGS. 7 and 9, if the tilt angle 111 is equal to the tilt angles 222 and 333, or even if the tilt angle 111 is greater than the tilt angles 222 and 333.

As described above, the preload forces placed on the mounting plates 70 and 75 by compression springs 71 of dampening devices 30 and 35, maintain corresponding contact pressures between the casters 20 and 25 and the ground. This allows the weight distribution assembly 100 to maintain contact of the drive wheel 9 with the ground in different driving and surface conditions while also improving vertical stability of the forklift truck 5.

For forklift trucks having a low lifting capability and that are traveling in a straight line, the described weight distribution assembly 100 provides a relatively static system. The supporting force on each of the caster assemblies 125 and 175 is approximately the same, with the pressure force applied to the drive wheel 9 being load dependent. Furthermore, a load in a central location on the forks 10 contributes to a vertical stabilization of the forklift truck 5.

Forklift trucks having a high lifting capability, however, with increasing lifting height may need a more rigid undercarriage structure. The torsional force 132 exerted on the coupling bar 15 is controlled by the weight distribution assembly 100 so that significant pressure of the drive wheel 9 against the ground surface is maintained even when there are ground irregularities or wear on the drive wheel 9.

### Alternate Embodiments

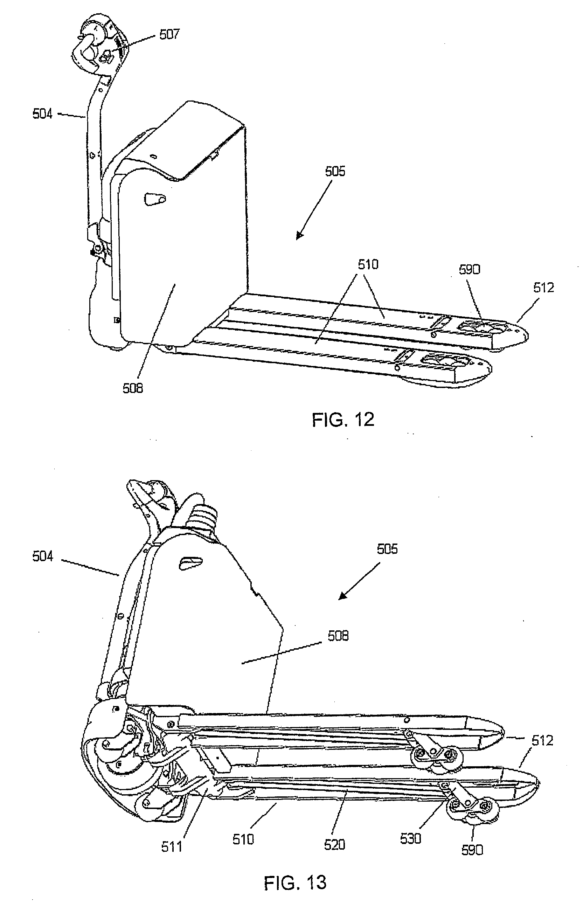

FIG. 12 shows an industrial pallet truck 5 that includes a fork 10 and a wheel assembly 590. It can be seen from FIG. 12 that the pallet truck 5 may include two forks, each nearly identical to fork 10. Furthermore, the pallet truck 5 is shown to include a vehicle frame 8 and a steer arm 4 by which the pallet truck is guided. The fork 10 is shown having a fork end 512 located on the opposite end of the fork 10 from the vehicle frame 8.

The steer arm 4 may include electronic or mechanical controls that raise and lower the fork 10 or that activate the traction motor 7 (FIG. 3) residing in the vehicle frame 8. It is understood that the pallet truck 5 shown is merely one example of a type of industrial lift truck that could be used with the present invention. For example, a motorized rider pallet truck may include an extended frame upon which an operator may stand while the motorized rider pallet truck is being operated. Other industrial lift trucks employing forks are similarly anticipated, and their applications and embodiments involving the present invention are herein claimed.

Pallet trucks, such as pallet truck 5, may be pulled by an operator by means of the steer arm 4, or they may be powered by the traction motor 7 (FIG. 3) and simply guided by the steer arm 4. In either case, the pallet truck 5 is efficient at transporting or moving a load which may be placed on one or more forks 10.

In order to efficiently transport a load, it is advantageous that pallet truck 5 include a system for raising and lowering the forks. FIG. 13 is a rotated bottom view of the pallet truck 5 shown in FIG. 12 with the load wheel assembly 590 pivoted away from the fork 10. A pivot or yoke 530 pivotally attaches the load wheel assembly 590 to the fork 10. A tension arm or push arm 520 is connected between the yoke 530 and the vehicle frame 8. The push arm 520 may be pulled rearward away from the fork end 512, for example, to lower the load wheel assembly 590, and in turn raise the fork 10. Alternatively, with the fork 10 in the raised position, the push arm 520 may be pushed forward toward the fork end 512. This raises the load wheel assembly 590 causing the fork 10 to move downward into a lowered position.

The pivoting load wheel assembly 590 allows a load to be more easily picked up, transported, and relocated with forks 10. The steer arm 4 may include a button or control switch 507 that allows the operator to raise and lower the fork 10. For example, control switch 507 may cause a mechanical, electrical, or hydraulic controlled actuator 511 to either move the push arm 520 forward or rearward. This causes the load wheel assembly 590 to pivot downward or upward, respectively, either raising or lowering the fork 10.

Pallet trucks may operate over rough pavement or other rough surfaces, such as stone or cobbled roads. The load wheels on previous pallet trucks had a tendency to bounce up and down when traversing over these rough uneven surfaces. This increased vibration and created irregular shifts in direction of the pallet truck and any load on the pallet truck. The load wheel assembly 590 shown in FIGS. 12 and 13 solve at least some of these vibration and shifting problems by maintaining more consistent contact with the traveling surface.

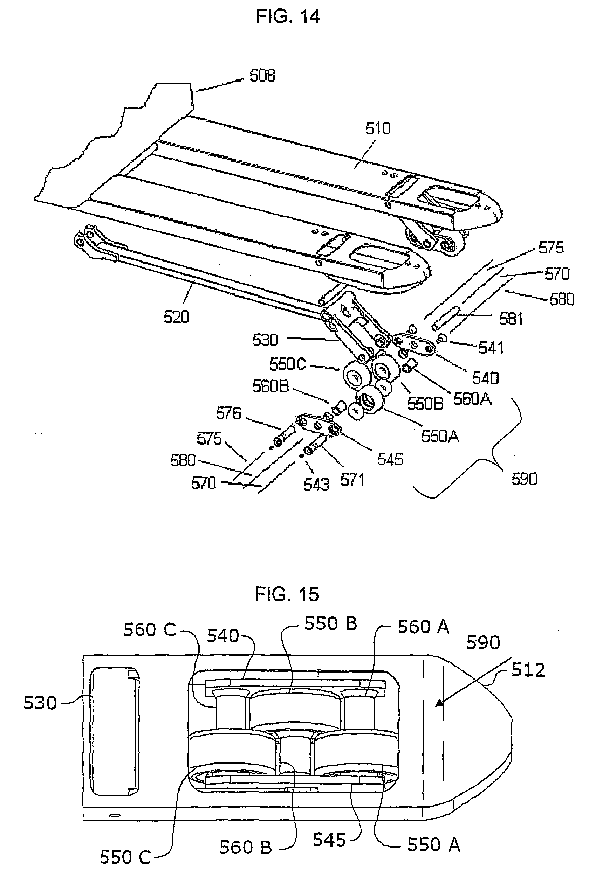

FIG. 14 provides an exploded view of the fork 10 and load wheel assembly 590 previously shown in FIGS. 12 and 13. The yoke 530 and push arm 520 of FIG. 13 are also shown partially disassembled in FIG. 14.

The load wheel assembly 590 includes three load wheels 550A, 550B, and 550C, each having a separate axis of rotation 570, 580, and 575, respectively. Axles 571, 576 and 581 are alternatively referred to as pins or rods and are each co-axially aligned with axes 570, 575 and 580, respectively. The axles each connect at opposite ends with a left mounting plate 540, a right mounting plate 545. The axles also extend through spacers 560. For example, axle 571 passes through left mounting plate 545, the front load wheel 550A, a front spacer 560, and right mounting plate 540. A cap 541 inserts into a hole (not shown) in the end of axle 571 and is held in place by a screw 543. Similar separate configurations are used to mount the middle load wheel 550B and the rear load wheel 550C.

The load wheels 550 and spacers 560 may be made out of nylon or steel. Of course other materials could also be used for spacers 560, such as other polymers, metals, or any other material known to those skilled in the art.

FIG. 15 shows an enlarged top view of the load wheel assembly 590. In one embodiment, the center load wheel 550B rotates about the axle 581 shown in FIG. 14 that extends through both wheel 550B and spacer 560B. Similarly, the front load wheel 550A rotates about the axle 571 shown in FIG. 14 that extends through both wheel 550A and spacer 560A. The rear load wheel 550C rotates about the third axle 576 in FIG. 14 that extends through both wheel 550C and spacer 560C.

The spacers 560A and 560C are located on the right sides of wheels 550A and 550C, respectively, and the spacer 560B is located on the left side of wheel 550B. The spacers 560 align the two load wheels 550A and 550C in an in-line arrangement that overlaps and is adjacent with load wheel 550B. This parallel overlapping alignment reduces friction, noise, and vibration as will be described in more detail below. The center load wheel 550B is alternatively referred to as a load roller.

The three load wheels 550 provide three points of contact with the ground that conform with changes in the ground terrain. This allows the load wheels 550 to maintain more consistent contact with varying ground terrain thus reducing friction, vibration and resulting noise in the forks 10. The overlapping wheel pattern helps reduce the overall dimension of the load wheel assembly 590, and allows for the load wheel assembly 90 to fit in the same shoe print as a conventional load wheel assembly. In this way, the load wheel assembly 590 may be interchangeably fitted into a conventional fork of a lift truck or pallet truck. Similarly, the three wheel overlapping design distributes the weight of loads on forks 10 across three different contact points. This further reduces deflection, stress and wear to each of the individual load wheels 550.

It is noted that although the drawings show the load wheel assembly 590 having load wheels 550, it is similarly anticipated that the load wheels 550 could be replaced with load rollers or bearings, for example. In other words, the load wheel assembly 590 could be replaced with a load roller assembly or a load bearing assembly and these embodiments are similarly claimed herein.

### Operation of the alternate embodiments

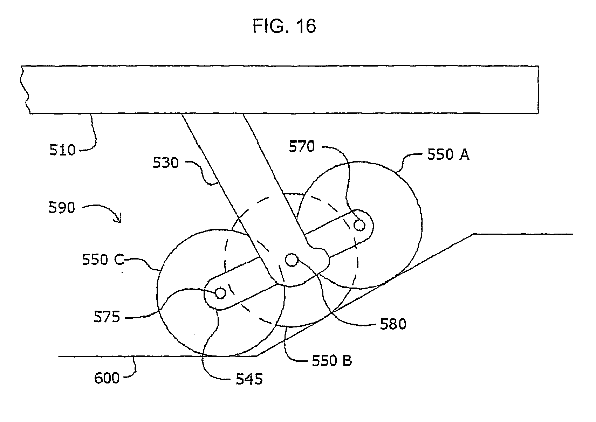

FIG. 16 shows in more detail how the load wheel assembly 590 may be operated when transporting a load on a pallet truck. The pivot or yoke 530 attaches the load wheel assembly 590 to the fork 10. The fork 10 may be lifted by pivoting the yoke 530 downwards towards a traveling surface 600 or lowered by pivoting the yoke 530 upwards. The load wheel assembly 590 includes a left plate 540 and right plate 545, that articulate about the central axis 580. The wheel 550B also rotates about axis 580 and front and rear wheels 550A and 550B rotate about axes 570 and 575, respectively.

As the load wheel assembly 590 approaches a non-planar incline in surface 600, the axis 570 for front load wheel 550A starts to move upward and rotate counter clockwise around central axis 580. Similarly, the axis 575 for rear load wheel 550C starts to rotate downward in a clockwise direction about central axis 580. When the load wheel assembly 590 moves onto level section of surface 600, axis 570 of front load wheel 550A rotates downward in a clockwise direction about central axis 580 and axis 575 of rear load wheel 550C rotates upward in a counter clockwise direction about central axis 580 until all three axes 570, 580, and 575 are substantially horizontally aligned. This rotation of axes 570 and 575 about central axis 580 allow the load wheels 550 to maintain more consistent contact against different terrain on surface 600.

Thus, a three-point contact with a non-planar traveling surface may be maintained by allowing the front and rear load wheels 550A and 550C to move in a vertical direction with respect to the central wheel 550B.

In one embodiment, the front and rear wheels 550A and 550C are aligned in a linear direction that is adjacent to a path of the central wheel 550B. Additionally or alternatively, a closest distance between the front and rear wheels 550A and 550C may be less than a diameter of the central wheel 554. This overlapping arrangement further reduces the overall footprint size required for the load wheel assembly 590.

In one embodiment, the load wheel assembly 590 may only include two wheels 550. The central load wheel 550B may rotate about central axis 580 as previously shown in FIG. 14 and the front load wheel 550A rotates about the second axis 570 as also shown in FIG. 14. However, in this embodiment, there is no third load wheel 550C. In this embodiment, the axis 570 may be configured to move in a vertical direction independently of the central axis 580. In one embodiment, the front load wheel 550A may also rotate about the central axis 580. A distance between the central axis 580 and the axis 570 may be less than a diameter of either load wheel 550A or 550B.

In another embodiment, a third load wheel, such as load wheel 550C is used and arranged in the in-line orientation with the front load wheel 550A, wherein the front and rear load wheels 550A and 550C are positioned adjacent and overlapping with the central load wheel 550B.

In one three-wheel embodiment, the rear load wheel 550C may rotate about axis 575 and also rotate about the central axis 580 as shown above in FIG. 16. Advantageously, the three load wheels 550A-550C may be arranged such that they maintain a three-point contact with non-planar traveling surfaces 600 (FIG. 16).

The load wheel assembly 590 may further be provided with spacers 560A-560C as shown in FIG. 15. Vibration and noise in the load wheel assembly 590 may be further reduced by inserting low friction spacers 560A-560C.

In another embodiment, a load roller assembly uses multiple load rollers instead of load wheels. The load roller assembly may include a first load roller that rotates about a first axis, such as the central axis 580, a second load roller that rotates about a second axis, such as the second axis 570, and a third load roller that rotates about a third axis, such as the third axis 575. The second axis 570 may be located closest to a fork end 512 and the third axis 575 may be located closest to the vehicle frame 8, for example.

In yet another embodiment, the central axis 580 is located between the second and third axes 570 and 575 and is held substantially rigid with respect to the fork 10. The second and third axes 570 and 575 may be configured to move vertically up and down independently of the central axis 580, such that the load rollers 550A and 550B (FIG. 16) can also move vertically up and down independently of the first axis 580. Additionally or alternatively, the second axis 570 may be allowed to move a vertical distance equal to and opposite that of the third axis 575.

Having described and illustrated the principles of the invention in a preferred embodiment thereof, it should be apparent that the invention may be modified in arrangement and detail without departing from such principles. I claim all modifications and variation coming within the spirit and scope of the following claims.

In the following further preferred embodiments are disclosed:
1. A materials handling vehicle including a vehicle frame and a drive wheel, the materials handling vehicle comprising:
   a first caster assembly located on a right side of the drive wheel;
   a second caster assembly located on a left side of the drive wheel; and
   a weight distribution assembly connecting the first and second caster assemblies to the vehicle frame and including separate individual preload mechanisms that apply continuous downward preload forces to the first and second caster assemblies.
2. The materials handling vehicle of 1 wherein the weight distribution assembly includes a coupling bar that connects the first caster assembly to the second caster assembly and formed of a unitary continuous piece of non-hollow solid metal.
3. The materials handling vehicle of 1 wherein each of the preload mechanisms includes a compressed spring that applies a downward force against the first or second caster assembly.
4. The materials handling vehicle of 3 including a preload adjustment mechanism that varies an amount of downward preload force exerted by the compressed spring on the first or second caster assembly.
5. The materials handling vehicle of 4 wherein the preload adjustment mechanism selectively varies an initial amount the compressed spring is compressed while in an initial non-loaded condition.
6. The materials handling vehicle of 1 wherein the preload mechanism selectively varies an amount of torsional force distributed by a coupling bar between the first and second caster assemblies.
7. The materials handling vehicle of 6 wherein a vertical pressure force exerted on the drive wheel remains substantially constant during the transfer of the torsional force between the first and second caster assemblies.
8. A weight distribution system of an industrial lift truck having a vehicle frame, the weight distribution system comprising:
   a first caster assembly;
   a second caster assembly; and
   a preload mechanism providing an adjustable preload force to the first or second caster assembly.
9. The system of 8 including a torsion bar connected between the first caster assembly with the second caster assembly
10. The system of 9 wherein the preload mechanism varies an amount of torsional force transferred by the torsion bar between the first or second caster assembly.
11. The system of 10 wherein the first or second caster assembly each include:
   a shock absorber coupled between the vehicle frame and a mounting plate that couples to a caster wheel; and
   a compression spring that extends over the shock absorber between the frame and the mounting plate that have an adjustable compression mechanism.
12. The system of 11 wherein an amount of compression of the compression spring is mechanically varied in a static condition to provide the adjustable preload force.
13. The system according to claim 8 including:
   a first mounting plate located on a first side of a drive wheel and connected on a bottom side to a first caster wheel and connected on a top side to the first caster assembly;
   a second mounting plate located on a second opposite side of the drive wheel and connected on a bottom side to a second caster wheel and connected on a top side to the second caster assembly; and
   a coupling bar coupling the first mounting plate to the second mounting plate while at the same time also rotating about a longitudinal axis according to the compression of the first and second caster assemblies.
14. The system of 8 wherein the pre-load force is adjusted according to a load weight on the lift truck or according to an operating condition of the lift truck.
15. A method for distributing lateral support of an industrial vehicle having a drive wheel, the method comprising:
   compressing and decompressing a dampening assembly attached to both first and second caster assemblies;
   exerting a torsion force along a coupling bar between the first and second caster assemblies; and
   selectively varying the amount of torsion force transferred by the coupling bar between the first and second caster assemblies by adjusting an amount of preload force applied to the first and second caster assemblies by the dampening assembly.
16. The method of 15 including maintaining an approximately constant pressure force on the drive wheel independently of an amount of torsion force transmitted between the first and second caster assemblies.
17. The method of 15 including varying the amount of preload force to vary the amount of torsion force transferred by the torsion bar between the first and second caster assemblies.
18. The method of 17 including altering the amount of preload force by varying an amount of compression of a spring located between a vehicle frame and a caster wheel.
19. The method of 18 including rotating a threaded nut to alter the amount the spring is compressed.
20. The method of 17 including:
   varying a bending moment of the torsion bar between the first and second caster assembly according to an amount of compression of the dampening assembly; and
   rotating the torsion bar about a longitudinal axis according to the amount of compression of the dampening assembly.

## Claims

1. Load roller assembly (590) for mounting in a fork end (512) of a pallet truck (5), wherein the load roller assembly (590) comprises:
a. a middle load wheel (550B) that rotates about a central axis (580);
b. a front load wheel (550A) that rotates about a second axis (570);
c. a rear load wheel (550C) that rotates about a third axis (575); wherein
d. the front load wheel (550A) and the rear load wheel (550B) are aligned in an in-line arrangement that overlaps and is adjacent with the middle load wheel (550B).

2. Load roller assembly (590) according claim 1, wherein the closest distance between the front load wheel (550A) and the rear load wheel (550C) is less than a diameter of the middle load wheel (550B).

3. Load roller assembly (590) according one of the previous claims, further comprising:
a. an axle (571) and a spacer (560A) for mounting the front load wheel (550A);
b. an axle (581) and a spacer (560B) for mounting the middle load wheel (550B); and
c. an axle (576) and a spacer (560C) for mounting the rear load wheel (550C); wherein
d. the spacers (560A, 560C) for the front and the rear load wheels (550A, 550C) are located on a first side of the wheels (550A, 550B, 550C) and the spacer (560B) for the middle load wheel (550B) is located on a second side of the wheels (550A, 550B, 550C).

4. Load roller assembly (590) according one of the previous claims, further comprising:
a. a left plate (540) and a right plate (545), for mounting the front load wheel (550A), the middle load wheel (550B), and the rear load wheel (550C); wherein
b. the left plate (540) and the right plate (545) articulate about the central axis (580).

5. Load roller assembly (590) according one of the previous claims, wherein the central axis 580 is located between the second and the third axes (570, 575) and is held substantially rigid with respect to the fork (10).

6. Load roller assembly (590) according one of the previous claims, wherein the second (570) and third axes (575) are configured to move vertically up and down independently of the central axis (580).

7. Load roller assembly (590) according to claim 6, wherein the second axis (570) moves a vertical distance equal to an opposite that of the third axis (575).

8. Load roller assembly (590) according one of the previous claims, wherein the load roller assembly (590) fits in the same shoe print as a conventional load wheel arrangement.

9. Pallet truck (5) comprising a vehicle frame (8), two forks (10) and a load roller assembly (590) according to one of the claims 1 - 8, wherein the load roller assembly (590) is mounted in an end of one of the forks (10).
